**Europäisches Patentamt**

**European Patent Office**

**Office européen des brevets**

(19)

(11) Numéro de publication: **0 074 867**
**B1**

(12) **FASCICULE DE BREVET EUROPÉEN**

(45) Date de publication du fascicule du brevet:
02.07.86

(51) Int. Cl.⁴: **G 05 D 23/02**

(21) Numéro de dépôt: **82401497.1**

(22) Date de dépôt: **06.08.82**

(54) **Soupapes thermostatiques simplifiées.**

(30) Priorité: **10.09.81 FR 8117182**

(43) Date de publication de la demande:
**23.03.83 Bulletin 83/12**

(45) Mention de la délivrance du brevet:
**02.07.86 Bulletin 86/27**

(84) Etats contractants désignés:
**DE GB IT**

(56) Documents cité:
**DE-A-1 476 445**
**FR-A-1 351 153**
**FR-A-1 447 752**
**FR-A-1 565 568**
**FR-A-2 034 707**
**FR-A-2 279 149**
**FR-A-2 332 879**
**US-A-2 469 930**
**US-A-3 640 454**

**Le dossier contient des informations techniques
présentées postérieurement au dépôt de la
demande et ne figurant pas dans le présent
fascicule.**

(73) Titulaire: **CALORSTAT INVESTISSEMENTS S.A., 21-
27 route d'Arpajon Ollainville, F-91290 Arpajon
(FR)**

(72) Inventeur: **Deman, Marc Henri, 5 bis rue de
l'Etang par Saint Chéron, F-91530 Saint- Maurice-
Montcouronne (FR)**

(74) Mandataire: **Lemoine, Michel, Cabinet Michel
Lemoine 13 Boulevard des Batignolles, F-75008
Paris (FR)**

## Description

L'invention est relative aux soupapes thermostatiques comprenant sur l'un des côtés d'un siège de clapet une pièce métallique formant à elle seule ledit siège de clapet, un étrier et une paroi annulaire à laquelle est fixé le boîtier d'un élément thermostatique muni d'une tige mobile qui traverse axialement le siège, ainsi que, sur l'autre côté du siège, une cage servant d'appui à un ressort de compression qui tend à repousser vers le siège un clapet porté par la tige mobile, l'étrier, le siège et la cage étant assemblés en une ossature munie d'un rebord périphérique de fixation.

Une telle soupape est décrite dans le FR-A-2.279.149. Dans ce cas, la susdite pièce métallique est une pièce moulée qui comporte aussi la cage servant d'appui au ressort. Cette soupape connue nécessite des investissements importants en moules ainsi que la conduite d'opérations délicates de moulage.

On connaît aussi des soupapes thermostatiques réalisées par les techniques moins coûteuses d'estampage ou d'emboutissage. L'état de la technique relatif à des soupapes thermostatiques de ce genre est rappelé ci-après.

Ainsi qu'il ressort notamment des US-A-2.469.930, FR-A-2.034.707 et US-A-3.640.454, l'ossature de telles soupapes est constituée par l'assemblage de trois pièces séparées, c'est-à-dire l'étrier, le siège et la cage, ce qui complique la fabrication de ces soupapes et suscite des risques de fuite aux endroits où ces pièces sont fixées l'une à l'autre.

Selon le US-A-2.469.930, l'étrier, le siège et la cage comprennent tous les trois des rebords périphériques plans qui sont superposés et serrés ensemble entre deux éléments successifs d'une tubulure. Selon le FR-A-2.034.707, le siège est traversé par les extrémités des bras de l'étrier de façon à permettre le sertissage de l'étrier sur le siège et ce dernier est lui-même serti à la périphérie de la cage, le long d'un bourrelet annulaire qui constitue le susdit rebord périphérique de fixation. Selon le US-A-3.640.454, le siège est traversé non seulement par les extrémités des branches de l'étrier, mais par celles de la cage, afin d'assurer une fixation par sertissage ou soudure, et c'est le rebord périphérique de ce siège qui sert à la fixation de la soupape.

Alors que l'étanchéité peut être réalisée de façon satisfaisante en grande série au niveau d'un bourrelet de sertissage annulaire, il n'en est pas de même soit au niveau de trois rebords plans superposés et serrés ensemble (US-A-2.469.930), soit lorsque le sertissage nécessite une double ou quadruple traversée du siège (FR-A-2.034.707 et US-A-3.640.454).

L'invention a notamment pour but, lors de l'utilisation des techniques de fabrication moins coûteuses, de diminuer le nombre des pièces nécessaires à la fabrication de l'ossature des susdites soupapes thermostatiques, de faciliter ainsi les opérations d'assemblage et d'améliorer l'étanchéité de ces soupapes lorsque leur clapet est appliqué sur le siège correspondant.

Pour atteindre ce but, la soupape thermostatique conforme à l'invention est essentiellement caractérisée en ce que la susdite pièce métallique forme uniquement le siège de clapet, l'étrier et la paroi annulaire susvisée et en ce que le siège de clapet est formé par une paroi annulaire pleine coaxiale à la paroi annulaire et s'évasant de façon tronconique vers le clapet pour constituer, intérieurement, le siège de clapet et, extérieurement, une portée de sertissage périphérique pour la cage.

De préférence, le rebord intérieur de la première paroi annulaire pleine est agencé de façon à permettre la fixation du boîtier de l'élément thermostatique par encliquetage tout le long de ce rebord, la pièce unique qui constitue le siège et l'étrier étant alors avantageusement réalisée en acier inoxydable.

Enfin, il y a intérêt à constituer le clapet en une matière plastique pouvant supporter les contraintes et températures de fonctionnement de la soupape.

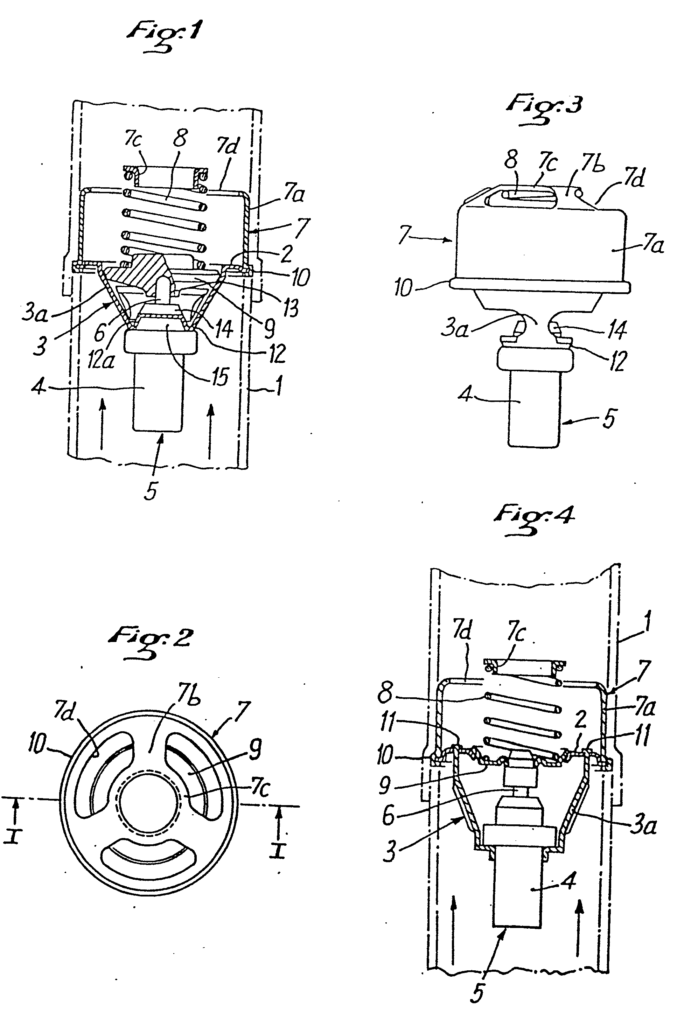

L'invention va être maintenant décrite plus en détail à l'aide du dessin annexé dont les figures 1, 2 et 3 représentent un mode de réalisation préféré de l'invention, respectivement en coupe axiale selon la ligne I-I de la figure 2, en plan et en élévation.

La figure 4 montre, semblablement à la figure 1, une soupape thermostatique de construction connue.

L'invention concerne une soupape thermostatique qui est destinée à être montée entre deux tronçons successifs d'une canalisation souple 1, en vue d'arrêter ou de laisser passer un liquide qui arrive dans le sens schématisé par des flèches aux figures 1 et 4, selon que la température de ce liquide est inférieure ou supérieure à un seuil déterminé. Ce liquide est en général l'eau de refroidissement d'un moteur à combustion interne, le seuil de température susvise étant alors de l'ordre de 80-83°C.

La soupape thermostatique comprend, sur l'un des côtés d'un siège de clapet 2, un étrier 3 auquel est fixé le boîtier 4 d'un élément thermostatique 5. Bien qu'il puisse être du type à capsule contenant un liquide vaporisable (comme dans le US-A-2.469.930), cet élément thermostatique 5 est de préference du type à boîtier contenant une cire fusible (comme dans le FR-A-2.034.707 et le US-A-3.640.454). De toute façon, l'élément thermostatique 5 est muni d'une tige mobile (ou "piston") 6 qui émerge d'autant plus du boîtier 4 que la température du liquide qui le baigne est plus élevée et qui traverse axialement le siège 2. Sur l'autre côté de celui-ci, la soupape thermostatique comprend une cage 7 servant d'appui à un ressort de compression 8 qui tend à repousser vers le siège 2 un clapet 9 monté à rotule sur la tige mobile 6. L'étrier 3, le siège 2 et la cage 7 sont assemblés en une ossature munie d'un rebord périphérique de fixation 10. La cage ou tubulure 7 a une paroi latérale cylindrique pleine 7a, qui est guidée par la canalisation 1 et qui est réunie par des bras 7b à un anneau 7c, lequel sert de guide et d'appui au ressort 8. Des ouvertures 7d sont laissées libres entre les bras 7b.

Lorsque la température du liquide arrivant dans le sens des flèches est inférieure au susdit seuil, la tige 6 n'émerge que faiblement du boîtier 4 et le clapet 9 est maintenu sur son siège 2. Lorsque la susdite température atteint et dépasse le susdit seuil, la tige 6 écarte le clapet 9 du siège 2 et le liquide passant entre les bras 3a de l'étrier peut traverser le siège 2 et sort de la cage 7 par ses ouvertures 7d.

Dans la soupape thermostatique connue qui est représentée à la figure 4, l'étrier 3, le siège 2 et la cage 7 sont constitués par autant de pièces séparées. La pièce constituant le siège 2 est traversée en 11 par les extrémités des bras 3a de la pièce constituant l'étrier 3, de façon à permettre le sertissage de cette deuxième pièce sur la première, ce qui fait naître à cet endroit des risques de fuite. La pièce constituant le siège 2 est elle-même sertie à la périphérie de la pièce constituant la cage 7, le long d'un bourrelet annulaire qui constitue le rebord périphérique de fixation 10.

Conformément à l'invention et comme illustré aux figures 1 à 3, l'étrier 3 et le siège 2 sont constitués en une seule pièce comprenant deux parois annulaires pleines coaxiales 12 et 13 qui sont réunies par une paroi ajourée. La première paroi annulaire pleine 12 sert à la fixation du boîtier 4 de l'élément thermostatique 5 tandis que la deuxième paroi annulaire pleine 13 limite intérieurement l'ouverture du siège et constitue par son bord extérieur, comme dans la construction connue (figure 4), une portée de sertissage périphérique.

Cette deuxième paroi annulaire 13 pleine comprend de préférence, d'une part, une partie tronconique s'évasant vers le haut, qui est reliée à la première paroi annulaire pleine 12 par les bras 3a de la paroi ajourée intermédiaire et contre laquelle peut venir s'appliquer hermétiquement le clapet 9 et, d'autre part, une partie approximativement plane qui part du haut de la partie tronconique jusqu'à son lieu de sertissage avec la cage 7.

Le rebord intérieur 12a de la première paroi annulaire pleine 12 est agencé de façon à permettre la fixation du boîtier 4 de l'élément thermostatique 5 par encliquetage tout le long de ce rebord 12a. A cet effet, ce rebord peut être replié coniquement vers le haut, comme visible à la figure 1, de façon à permettre de faire passer dans son ouverture centrale, par déformation élastique, une partie tronconique 14 du boîtier 4 qui se rétrécit vers le haut et qui est suivie d'une gorge 15 dans laquelle vient s'introduire et se bloquer le rebord 12a. Bien que la pièce unique 2, 3 puisse être réalisée en laiton, il est préférable de la réaliser en acier inoxydable qui a l'avantage d'être plus élastique que le laiton et facilite ainsi la fonction d'encliquetage.

Alors que le clapet 9 de la construction connue (figure 4) est fait de métal, il y a intérêt à constituer le clapet 9 conforme à l'invention en une matière plastique adaptée aux conditions de fonctionnement et d'emploi de la soupape thermostatique.

**Revendications**

1. Soupape thermostatique comprenant sur l'un des côtés d'un siège de clapet (2) une pièce métalhique formant à elle seule ledit siège de clapet (2), un étrier (3) wt une paroi annulaire (12) à laquelle est fixé le boîtier (4) d'un élément thermostatique (5) muni d'une tige mobile (6) qui traverse axialement le siège (2), ainsi que, sur l'autre côté du siège (2), une cage (7) servant d'appui à un ressort de compression (8) qui tend à repousser vers le siège (2) un clapet (9) porté par la tige mobile (6), l'étrier (3), le siège (2) et le clapet (9) étant assemblés en une ossature munie d'un rebord périphérique de fixation (10), caractérisée en ce que ladite pièce métallique, forme uniquement le siège de clapet (2), l'étrier (3) et la paroi annulaire (12) et en ce que le siège de clapet est formé par une paroi annulaire pleine (13) coaxiale à la paroi (12) et s'évasant de façon tronconique vers le clapet (9) pour constituer, intérieurement, le siège de clapet (2) et extérieurement une portée de sertissage périphérique pour la cage (7).

2. Soupape thermostatique selon la revendication 1, caractérisée en ce que le rebord intérieur (12a) de la première paroi annulaire pleine (12) est agencé de façon à permettre la fixation du boîtier de l'élément thermostatique (5) par encliquetage tout le long de ce rebord (12a).

3. Soupape thermostatique selon la revendication 2, caractérisée en ce que la pièce unique qui constitue le siège (2) et l'étrier (3) est en acier inoxydable.

4. Soupape thermostatique selon l'une quelconque des revendications 1 à 3, caractérisée en ce que le clapet (9) est en matière plastique.

5. Soupape thermostatique selon l'une quelconque des revendications 1 à 4, caractérisée en ce que l'élément thermostatique (5) est du type à cire.

**Patentansprüche**

1. Vereinfachtes thermostatisches Ventil aus einem auf einer der Seiten eines Ventilsitzes (2) befindlichen Metallteiles, das selbst besagten Ventilsitz (2) bildet und einer ringförmigen Wandung (12), an welcher das Gehäuse (4) eines Thermostatelements (5) befestigt ist, welches mit einem Stößel (6) ausgerüstet ist, der axial durch den Sitz (2) läuft, so daß auf der anderen Seite des Sitzes (2) ein Käfig (7), welcher als Auflage für eine Druckfeder (8) dient, die eine vom Stößel (6) getragene Ventilklappe (9) gegen den Sitz (2) drückt, wobei der Bügel (3), der Sitz (2) und die Ventilklappe (9) zu einer Einheit zusammengebaut sind, welche auf dem ganzen Umfang eine Befestigungswulst (10) hat und dadurch gekennzeichnet ist, daß das besagte Metallteil allein den Ventilsitz (2), den Bügel (3) und die ringförmige Wand bildet und daß der Ventilsitz durch eine voll ringförmige Wandung (13) gebildet wird, die koaxial zur Wandung (12) steht und sich trichterförmig zur Ventilklappe (9) ausweitet, um im Innern den Ventilsitz (2) und außen eine Auflage für eine Quetschverbindung für den Käfig zu bilden.

2. Vereinfachtes thermostatisches Ventil gemäß Anspruch 1, dadurch gekennzeichnet, daß die innere Wulst (12a) so angeordnet ist, daß die Befestigung des Thermostatelementgehäuses (5) durch Verklinkung auf dem ganzen Umfang der Wulst (12a) geschehen kann.

3. Vereinfachtes thermostatisches Ventil gemäß Anspruch 2, dadurch gekennzeichnet, daß das einzige Teil, welches den Sitz (2) und den Bügel (3) bildet, aus nichtrostendem Stahl besteht.

4. Vereinfachtes thermostatisches Ventil gemäß einem der Ansprüche 1 bis 3, dadurch gekennzeichnet, daß die Klappe aus Kunststoff besteht.

5. Vereinfachtes thermostatisches Ventil gemäß einem der Ansprüche 1 bis 4, dadurch gekennzeichnet, daß das Thermostatelement vom Wachstyp ist.

**Claims**

1. A thermostatic valve comprising, on one of the sides of a valve seating (2), a metallic member forming by itself the said valve seating (2), a stirrup (3), and an annular wall (12) to which there is fixed the casing (4) of a thermostatic element (5) equipped with a movable stem (6) which traverses the seating (2) axially, as well as, on the other side of the seating (2), a cage (7) serving as a support for a compression spring (8) which tends to push back towards the seating (2) a valve member (9) carried by the movable stem (6), the stirrup (3), the seating (2) and the valve member (9) being assembled to form an ossature equipped with a peripheral attachment flange (10), characterised in that the said metallic member solely forms the valve seating (2), the stirrup (3) and the annular wall (12) and in that the valve seating is formed by a solid annular wall (13) coaxial with the wall (12) and widening out in a frustoconical manner towards the valve member (9) to constitute, internally, the valve seating (2), and, externally, a peripheral bearing surface for the crimping of the cage (7).

2. A thermostatic valve according to Claim 1, characterised in that the internal flange (12a) of the first solid annular wall (12) is adapted in such a manner as to permit the attachment of the casing of the thermostatic element (5) by spring catching all along this flange (12a).

3. A thermostatic valve according to Claim 2, characterised in that the single member which constitutes the seating (2) and the stirrup (3) is made of stainless steel.

4. A thermostatic valveaccording to any one of the Claims 1 to 3, characterised in that the valve member (9) is made of plastics material.

5. A thermostatic valve according to any one of the Claims 1 to 4, characterised in that the thermostatic element (5) is of the wax type.

Fig.1

Fig.3

Fig.2

Fig.4

1